# EUROPEAN PATENT APPLICATION

(11) **EP 2 658 156 A1**
(43) Date of publication of application: **30.10.2013**
(21) Application number: 11851803.4
(22) Date of filing: 22.12.2011
(51) Int. Cl.: H04J 11/00

(54) **RECEIVING DEVICE, RECEIVING METHOD AND COMPUTER PROGRAM**

(30) Priority: 22.12.2010 JP 2010285663
(71) Applicant: NEC CASIO Mobile Communications, Ltd., Kawasaki-shi Kanagawa 211-8666 (JP); NTT DoCoMo, Inc., Tokyo 100-6150 (JP)
(72) Inventor: ORIO, Masao, Kawasaki-shi Kanagawa 211-8666 (JP)
(74) Representative: Vossius & Partner
(86) International application number: PCT/JP2011/079805
(87) International publication number: WO 2012/086755

(57) **Abstract**

The present invention provides a receiving device, a receiving method and a computer program, such that the overhead for the process time required for deinterleaving of a PDCCH and the amount of memory for storing the data after data processing are reduced. The deinterleaving and the cyclic deshift of the PDCCH are processed at the same time as the demodulation for de-mapping. As such, the receiving device has: a deinterleaver unit which uses a row counter and a column counter to calculate a location number in a deinterleave matrix; a cyclic shift amount calculation unit which calculates the cyclic shift amount applied to demodulation data, before that demodulation data is acquired; a counter initial value calculation unit which calculates the initial values of the row counter and the column counter from the calculated cyclic shift amount and sends the results to the deinterleaver unit; and an address changing unit which changes the address of the destination to which the demodulation data is to be written to the location number calculated by the deinterleaver unit.

## Description

### {Technical Field}

The present application claims priority from Japanese Patent Application No. 2010-285663 filed on December 22, 2010, the contents of which are incorporated herein by reference.
The present invention relates to a receiver, a receiving method, and a computer program.

### {Background Art}

In Long Term Evolution (LTE) as the standards of a communication method, Orthogonal Frequency Division Multiplexing Access (OFDMA) is applied as a wireless communication method of Downlink.

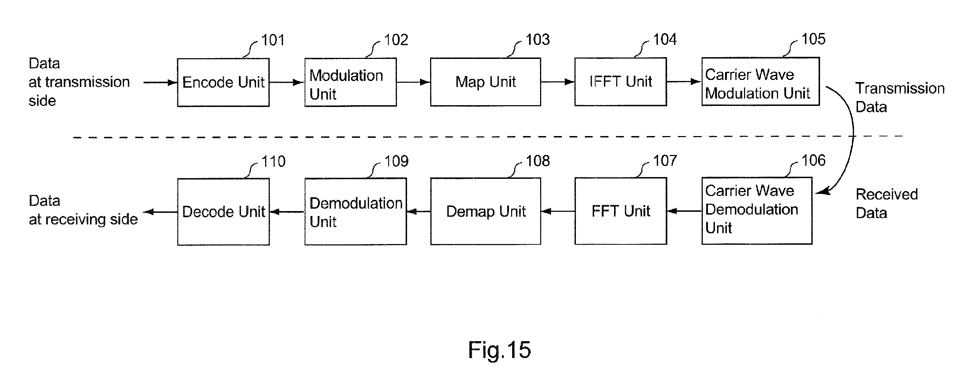

Fig. 15 is a block diagram showing an outlined configuration of a conventional communication system.

A transmission side is explained below at first.

At a transmission side, error correction encoding, error detection encoding, and size adjustment are carried out for each user datum in an encode unit 101. Then, in a modulation unit 102, encoded data supplied from the encode unit 101 is assigned to each point on an IQ plane, corresponding to each type of modulation method, and furthermore precoding of spatial multiplexing, transmitter diversity, and the like are timely executed in order to create data for each transmission antenna.

Subsequently, in a map unit 103, a modulation unit output datum supplied from the modulation unit 102 is mapped to each resource element (RE) on a frequency axis, for each transmission antenna. After a mapping operation for one OFDM symbol, an output from the map unit 103 is transformed into a datum on a time axis, for each transmission antenna, in an Inverse Fast Fourier Transform (IFFT) unit 104. Then, in a carrier wave modulation unit 105, an output from the IFFT unit 104 is carrier-wave-modulated for each transmission antenna, and transmitted as transmission data from each transmission antenna (not shown).

In this context, a map unit on a frequency axis is called 'RE' and a unit of time for executing an IFFT is called 'OFDM symbol.'

Explained next below is a receiving side.

At a receiving side, a datum on a time axis is taken out from received data in a carrier wave demodulation unit 106. The datum on a time axis is transformed into a datum on a frequency axis, in a Fast Fourier Transform (FFT) unit 107. Then, in a demap unit 108, a datum mapped in each RE is taken out. The datum taken out is demodulated, corresponding to each modulation method, in a demodulation unit 109. In the end, error detection and error correction are carried out in a decode unit 110.

In LTE, Physical Control Format Indicator Channel (PCFICH), Physical HARQ Indicator Channel (PHICH), and Physical Downlink Control Channel (PDCCH) are transmitted by using at most four OFDM symbols, starting from an OFDM symbol placed at a top of a sub-frame. PCFICH is a datum for notifying a receiving terminal of the number of OFDM symbols with which PDCCH is transmitted. PHICH is a datum for notifying the receiving terminal of a HARQ (Hybrid Automatic Repeat Request) Indicator. PDCCH is a datum for notifying the receiving terminal of various parameters, Transmit Power Control (TPC), and the like for receiving Physical Downlink Shared Channel (PDSCH).

In the meantime, a method of mapping PCFICH, PHICH, and PDCCH is specified in non-patent literature NPL 1.

As specified in NPL 1, PCFICH, PHICH, and PDCCH are mapped while Resource Element Group (REG) being used as a unit.

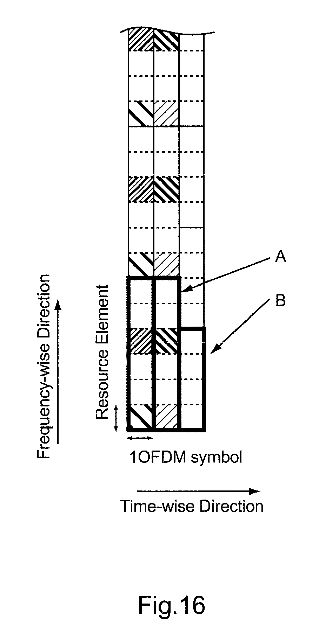

Fig. 16 is a diagram showing an outline of mapping PCFICH, PHICH, and PDCCH. In Fig. 16, each square having diagonal lines represents an RE in which a Reference Signal (RS) of each transmission antenna is placed. In this context, RS is a pilot signal.

One REG is composed of six REs in the case of an OFDM symbol having an RS, as "A" represents in Fig. 16. In the meantime, one REG is composed of four REs in the case of an OFDM symbol having no RS, as "B" represents in Fig. 16. As shown in Fig. 16, RS mapping positions are based on a cycle of six REs, for all transmission antennas. A mapping offset position is determined according to a cell ID of a base station. Incidentally, any RS is removed in the course of mapping in an REG.

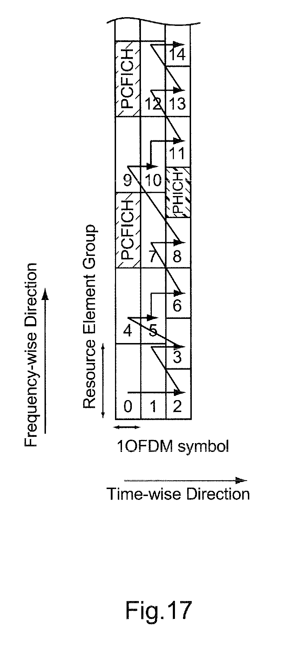

According to paragraph 6.8.5 in NPL 1, mapping information of PHICH and PCFICH is required for mapping PDCCH. Fig. 17 shows an outline of the mapping. Using an REG as a unit, PDCCH is mapped at a position without PCFICH and PHICH, for each OFDM symbol in a time-wise direction. Furthermore, such mapping is carried out sequentially in a direction from a low-frequency side to a high-frequency side. Incidentally, a number written in each REG in Fig. 17 is a PDCCH symbol-quadruplet number.

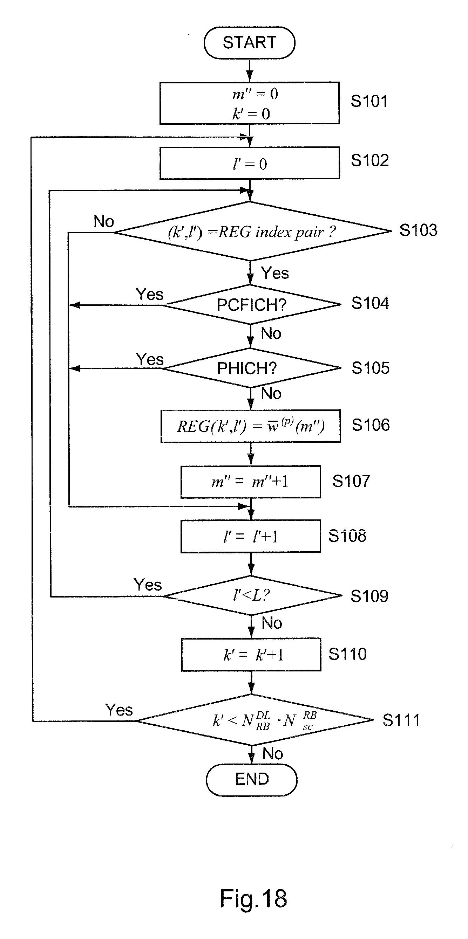

A workflow of mapping PDCCH, specified in paragraph 6.8.5 in NPL 1, is shown in a flowchart of Fig. 18.

At Step S101, a PDCCH symbol-quadruplet number m" is initialized to be zero, and an RE number k' is initialized to be zero.

At Step S102, an OFDM symbol number l' is initialized to be zero. At Step S103, it is judged whether or not an array (k', l') having the RE number k' and the OFDM symbol number l' as elements is equal to a REG index pair. k' of the REG index pair is a multiple number of 6 or 4 when there exists an RS or not, respectively.

In the case where it is judged at Step S103 that the array (k', l') is equal to the REG index pair, operation progresses to Step S104 in order to judge whether or not PCFICH is mapped to the REG (k', l').

If it is judged at Step S104 that PC is not mapped to the REG (k', l'), operation progresses to Step S105 in order to judge whether or not PHICH is mapped to the REG (k', l').

If it is judged at Step S105 that PHICH is not mapped to the REG (k', l'), operation progresses to Step S106 in order to map PDCCH symbol-quadruplet to the REG (k', l'). Then, a PDCCH symbol-quadruplet number m" is incremented by only 1 at Step S107, and operation progresses to Step S108.

In any one of the cases where it is judged at Step S103 that the array (k', l') is not equal to the REG index pair, it is judged at Step S104 that PCFICH is mapped to the REG (k', l'), and it is judged at Step S105 that PHICH is mapped to the REG (k', l'); operation progresses to Step S108.

At Step S108, the OFDM symbol number l' is incremented by only 1.

Then, at Step S109, it is judged whether or not the OFDM symbol number l' is less than a number 'L'; namely whether or not the symbol number has reached a maximum OFDM symbol (the number 'L') at which PDCCH is mapped.

In the case where it is judged at Step S109 that the OFDM symbol number l' is less than the number 'L', the symbol number has not yet reached the maximum OFDM symbol (the number 'L') at which PDCCH is mapped, and therefore operation returns to Step S103 to repeat the steps described above.

In the case where it is judged at Step S109 that the OFDM symbol number l' is not less than the number 'L,' the symbol number has reached the maximum OFDM symbol (the number 'L') at which PDCCH is mapped, and therefore operation progresses to Step S110 to increment the RE number k' by 1.

At Step S111, it is judged whether or not the RE number k' has reached a maximum RE at which PDCCH is mapped. In the case where it is judged that the RE number k' has not yet reached the maximum RE at which PDCCH is mapped, operation returns to Step S102 to repeat the steps described above.

If it is judged at Step S111 that the RE number k' has reached the maximum RE at which PDCCH is mapped, operation of mapping PDCCH finishes.

As described above, PDCCH is mapped on the basis of the RE number.

In the meantime, prior to the mapping operation, cyclic shifting and interleaving are carried out for PDCCH, as described in NPL 1.

### {Citation List}

### {Non Patent Literature}

NPL 1: 3GPP TS 36.211, "Physical Channels and Modulation"

### {Summary of Invention}

### {Technical Problem}

According to the steps shown in the flowchart of Fig. 18, operation of mapping PDCCH in LTE is carried out for each OFDM symbol in a time-wise direction from the low-frequency side, and the operation sequentially proceeds in a frequency-wise direction. The operation of mapping PDCCH needs to be carried out, while staying away from any REG where PCFICH and PHICH are mapped.

In this context, if it is attempted to materialize demapping operation by way of following the mapping steps shown in the flowchart of Fig. 18, as they are, simply in a reverse direction, demapping of PDCCH can be done only after receiving all the OFDM symbols in the time-wise direction. Therefore, an overhead for process time becomes greater. Furthermore, a memory unit for storing Raw RE (RRE) data requires a memory space for at most four OFDM symbols so that a scale of a circuit becomes enlarged.

An inventor of the present invention has invented a receiver, a receiving method and a computer program that give a solution to the issues described above, and make it possible to demap PDCCH with a small overhead of process time and by means of a small-scale circuit or a small-scale memory, and the inventor has already had a patent application on the invention (Japanese patent application number: 2010-116104, applied on May 20, 2010; hereinafter, called "the prior application"). Unfortunately, deinterleaving and cyclic deshifting of PDCCH, for which cyclic shifting and interleaving have been carried out, are not taken into consideration in the prior application.

Deinterleaving of PDCCH in LTE is carried out together with cyclic shifting, for data of all OFDM symbols. Therefore, in a naive notion, the operation can be carried out only after demodulation data of all the OFDM symbols become prepared, and accordingly the process time becomes greater.

Furthermore, owing to the nature of a re-arrangement process, writing back to the same memory by way of Read Modify Write cannot be implemented in deinterleaving and cyclic deshifting. Therefore, another memory unit of the same size as a memory unit for storing the demodulation data before processing operation is needed for storing data after the processing operation so that the memory capacity becomes enlarged.

Thus, it is an objective of the present invention to provide a receiver, a receiving method and a computer program that give a solution to the issues described above, and make it possible to reduce an overhead of process time required for deinterleaving of PDCCH and cut down a memory unit for storing data after data processing operation.

### {Solution to Problem}

According to a first aspect of the present invention, provided is a receiver for receiving a signal according to LTE, for which interleaving and cyclic shifting are carried out, the signal being mapped for each transmission antenna with an RE on a frequency-wise axis being as a unit, the receiver comprising: a PDCCH demap unit for demapping PDCCH mapped to an OFDM symbol; and a PDCCH deinterleave and cyclic deshift unit for carrying out cyclic deshifting and deinterleaving on a demodulation datum obtained by the PDCCH demap unit; wherein the PDCCH demap unit includes: a judgment means for making a judgment, with respect to an REG, which is a group of the RE and provided with a serial number, in order of the serial number, on whether or not neither PCFICH nor PHICH are mapped to an attention-receiving REG that is watched at the time, and furthermore, on whether or not the serial number provided to the attention-receiving REG is correspondent to the OFDM symbol number at present, which is input each time when an OFDM symbol is received; and a PDCCH demapping execution means for demapping PDCCH of the attention-receiving REG, in the case where neither PCFICH nor PHICH are mapped to the attention-receiving REG, and furthermore the serial number provided to the attention-receiving REG is correspondent to the OFDM symbol number at present; and the PDCCH deinterleave and cyclic deshift unit includes: a deinterleave unit for calculating a position number on a deinterleaving matrix by using a row counter and a column counter; a cyclic shift amount calculation unit for calculating a cyclic shift amount implemented on the demodulation datum, before the demodulation datum is obtained; a counter initial value calculation unit for calculating initial values of a row counter and a column counter, by using the cyclic shift amount, which has been calculated, in order to give the deinterleave unit the initial values; and an address change unit for changing an address where the demodulation datum is written, to the position number calculated by the deinterleave unit.

According to a second aspect of the present invention, provided is a receiving method for receiving a signal according to LTE, for which interleaving and cyclic shifting are carried out, the signal being mapped for each transmission antenna with an RE on a frequency-wise axis being as a unit, the receiving method comprising execution of: a first judgment step for making a judgment, with respect to an REG, which is a group of the RE and provided with a serial number, in order of the serial number, on whether or not at least either of PCFICH and PHICH is mapped to an attention-receiving REG that is watched at the time, a second judgment step for making a judgment on whether or not the serial number provided to the attention-receiving REG is correspondent to the OFDM symbol number at present, which is input each time when an OFDM symbol is received; and a PDCCH demapping step for demapping PDCCH of the attention-receiving REG, in the case where neither PCFICH nor PHICH are mapped to the attention-receiving REG, and furthermore the serial number provided to the attention-receiving REG is correspondent to the OFDM symbol number at present; and in addition to execution of the above steps, further comprising execution of; a cyclic shift amount calculation step for calculating a cyclic shift amount implemented on the demodulation datum, before the demodulation datum is obtained; a counter initializing step for calculating initial values of a row counter and a column counter for calculating a position number on a deinterleaving matrix, by using the cyclic shift amount calculated, and initializing the row counter and the column counter; a deinterleaving step for calculating the position number on the deinterleaving matrix by using a row counter and a column counter; and an address changing step for changing an address where the demodulation datum is written, to the position number calculated by the deinterleaving step.

According to a third aspect of the present invention, provided is a computer program to operate a computer of a receiver for receiving a signal according to LTE, for which interleaving and cyclic shifting are carried out, the signal being mapped for each transmission antenna with an RE on a frequency-wise axis being as a unit, the computer program comprising execution of: a first judgment step for making a judgment, with respect to an REG, which is a group of the RE and provided with a serial number, in order of the serial number, on whether or not at least either of PCFICH and PHICH is mapped to an attention-receiving REG that is watched at the time, a second judgment step for making a judgment on whether or not the serial number provided to the attention-receiving REG is correspondent to the OFDM symbol number at present, which is input each time when an OFDM symbol is received; and a PDCCH demapping step for demapping PDCCH of the attention-receiving REG, in the case where neither PCFICH nor PHICH are mapped to the attention-receiving REG, and furthermore the serial number provided to the attention-receiving REG is correspondent to the OFDM symbol number at present; and in addition to execution of the above steps, further comprising execution of; a cyclic shift amount calculation step for calculating a cyclic shift amount implemented on the demodulation datum, before the demodulation datum is obtained; a counter initializing step for calculating initial values of a row counter and a column counter for calculating a position number on a deinterleaving matrix, by using the cyclic shift amount calculated, and initializing the row counter and the column counter; a deinterleaving step for calculating the position number on the deinterleaving matrix by using a row counter and a column counter; and an address changing step for changing an address where the demodulation datum is written, to the position number calculated by the deinterleaving step.

### {Advantageous Effects of Invention}

According to the present invention, it becomes possible to reduce an overhead of process time required for deinterleaving of PDCCH and cut down a memory unit for storing data after data processing operation.

### {Brief Description of Drawings}

Fig. 1 is a block diagram showing a configuration example of a receiver according to an embodiment of the present invention.
Fig. 2 is a drawing that shows an example of a re-arrangement pattern within rows of REGs of PDCCH by an interleaving process.
Fig. 3 is a diagram that shows an example of re-arrangement by using the re-arrangement pattern, shown in Fig. 2, of REGs of PDCCH by an interleaving process.
Fig. 4 is a drawing for explaining an example of a processing operation by a counter initial value calculation unit in the receiver shown in Fig. 1, with reference to a source code of a computer program.
Fig. 5 is a drawing for explaining an example of a processing operation by a deinterleave unit in the receiver shown in Fig. 1, with reference to a source code of a computer program.
Fig. 6 is a diagram that shows an REG arrangement.
Fig. 7 is a diagram that shows an REG arrangement.
Fig. 8 is a flowchart for explaining a demapping operation of PDCCH.
Fig. 9 is a flowchart for explaining details of a process for one RB in the flowchart shown in Fig. 8.
Fig. 10 is a diagram that shows a mapping image of PCFICH.
Fig. 11 is a diagram that shows a mapping image of PHICH.
Fig. 12 is a diagram that shows a mapping image of PHICH.
Fig. 13 is a drawing that explains a demapping operation by using an OFDM symbol number lnow' at present.
Fig. 14 is a block diagram showing a configuration example of hardware of a computer that executes a series of processes by way of a computer program.
Fig. 15 is a block diagram showing an outlined configuration of a conventional communication system.
Fig. 16 is a diagram that shows an outline of mapping PCFICH, PHICH, and PDCCH.
Fig. 17 is a diagram that shows mapping information of PHICH and PCFICH required for mapping PDCCH.
Fig. 18 is a flowchart for explaining a conventional workflow of mapping PDCCH.

### {Description of Embodiments}

A preferred embodiment of the present invention is explained below with reference to the accompanied drawings.

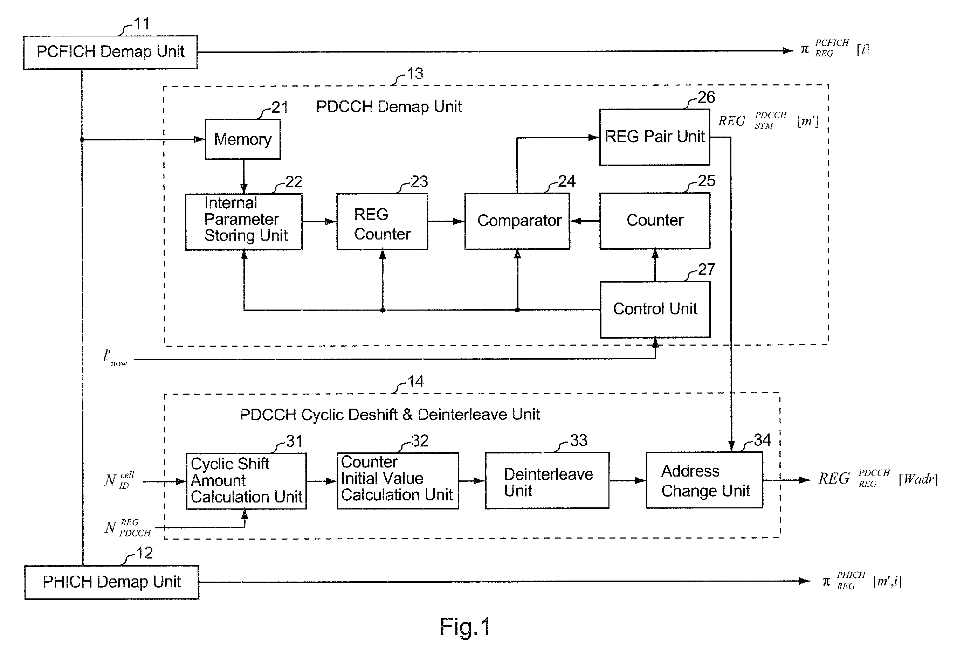

Fig. 1 is a block diagram showing a configuration example of a receiver according to an embodiment of the present invention. Being used in a mobile phone, for example, this receiver includes a PCFICH demap unit 11, a PHICH demap unit 12, a PDCCH demap unit 13, and a PDCCH cyclic deshift and deinterleave unit 14.

The PCFICH demap unit 11 outputs an REG number of an REG where PCFICH is mapped. The PHICH demap unit 12 outputs an REG number of an REG where PHICH symbol-quadruplet is mapped. The PDCCH demap unit 13 outputs an REG number of an REG where PDCCH is mapped. The PDCCH cyclic deshift and deinterleave unit 14 carries out a cyclic deshift and deinterleaving for a demodulation datum (REG number) to be obtained by the PDCCH demap unit 13.

The PCFICH demap unit 11 and the PHICH demap unit 12 output a parameter for demapping PDCCH, to the PDCCH demap unit 13.

A memory unit 21, an internal parameter storing unit 22, an REG counter 23, a comparator 24, a counter 25, an REG pair unit 26, and a control unit 27 are provided in the PDCCH demap unit 13. The PDCCH demap unit 13 is invoked each time when an OFDM symbol is received, and an OFDM symbol number l'now at present is given as a parameter at the time of invoking.

The memory unit 21 stores various parameters that the PCFICH demap unit 11 and the PHICH demap unit 12 output.

Meanwhile, the internal parameter storing unit 22 stores a PCFICH symbol quadruplet-number: ${MIN}_{quadruplet}^{PCFICH}$
a PHICH symbol quadruplet-number: ${MIN}_{quadruplet}^{PHICH} \left[{lʹ}_{i}\right]$
and a PHICH mapping unit number: ${MIN}_{unit}^{PHICH} \left[{lʹ}_{i}\right]$
Details of the PCFICH symbol quadruplet-number (Math 1), the PHICH symbol quadruplet-number (Math 2), and the PHICH mapping unit number (Math 3) are described later.

The REG counter 23 counts REGs of each CH. The comparator 24 makes a judgment on an REG. Namely, the comparator 24 makes a judgment with respect to an REG provided with a serial number l', in order of the serial number l', on whether or not neither PCFICH nor PHICH are mapped to an attention-receiving REG that is watched at the time, and furthermore, on whether or not the serial number l' provided to the attention-receiving REG is correspondent to the OFDM symbol number l'nowat present, which is input each time when an OFDM symbol is received. The counter 25 counts the PDCCH number and the OFDM symbol number l'. The REG pair unit 26 demaps PDCCH of the attention-receiving REG, in the case where neither PCFICH nor PHICH are mapped to the attention-receiving REG, and furthermore the serial number l'provided to the attention-receiving REG is correspondent to the OFDM symbol number l'at present. The control unit 27 controls an entire section of the PDCCH demap unit 13.

The PCFICH demap unit 11 demaps PCFICH. Moreover, at this time, the PCFICH demap unit 11 searches for the PCFICH symbol quadruplet-number (Math. 1) correspondent to a minimum REG number where PCFICH is mapped, for demapping PDCCH, and outputs the PCFICH symbol quadruplet-number. The PCFICH symbol quadruplet-number (Math. 1) is stored in the memory unit 21 of the PDCCH demap unit 13.

The PHICH demap unit 12 demaps PHICH. Moreover, at this time, the PHICH demap unit 12 searches for the PHICH symbol quadruplet-number (Math. 2) correspondent to a minimum REG number where PHICH is mapped, and the PHICH map unit number (Math. 3), for demapping PDCCH, and outputs those numbers. The PHICH symbol quadruplet-number (Math. 2) and the PHICH mapping unit number (Math. 3) are stored in the memory unit 21 of the PDCCH demap unit 13.

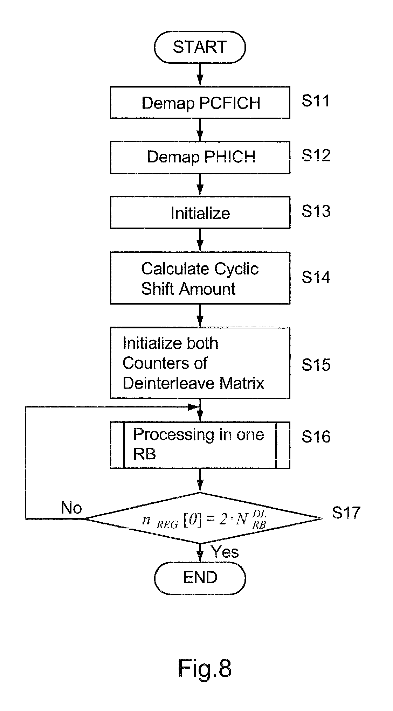

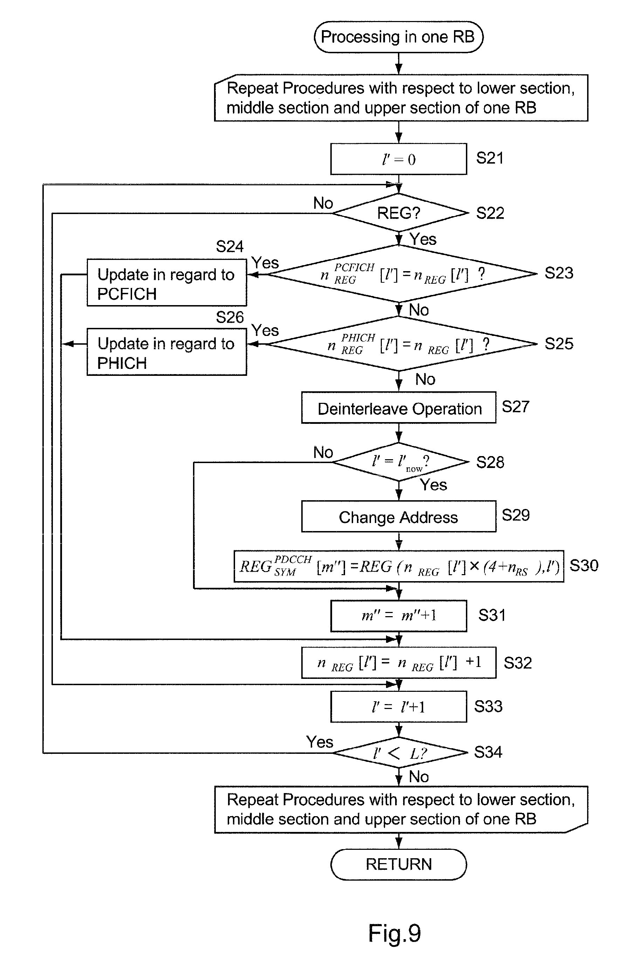

At an initializing operation (Step S13) to be explained with reference to the flowchart of Fig. 8, the internal parameter storing unit 22 initializes the following numbers as parameters; namely, a PCFICH symbol quadruplet-number: ${n}_{quadruplet}^{PHICH}$
a PHICH symbol quadruplet-number: ${n}_{quadruplet}^{PHICH} \left(lʹ\right)$
and a PHICH mapping unit number: ${n}_{unit}^{PHICH} \left(lʹ\right)$
to be the PCFICH symbol quadruplet-number (Math. 1), the PHICH symbol quadruplet-number (Math. 2), and the PHICH mapping unit number (Math. 3), respectively. Moreover, at an updating operation (Step S24) in regard to PCFICH, and at an updating operation (Step S26) in regard to PHICH, both the operations being explained with reference to the flowchart of Fig. 9, the internal parameter storing unit 22 updates each parameter.

The REG counter 23 counts a REG number for PCFICH, PHICH, and PDCCH. At the initializing operation (Step S13) to be explained with reference to the flowchart of Fig. 8, the REG counter 23 is initialized with an internal parameter after the initializing operation.

Being controlled by the control unit 27, the REG counter 23 carries out an update in regard to PCFICH and an update in regard to PHICH, at the updating operation (Step S24) in regard to PCFICH, and at the updating operation (Step S26) in regard to PHICH, both the operations being explained with reference to the flowchart of Fig. 9. Furthermore, being provided for each OFDM symbol, the REG counter 23 that counts a REG number for PDCCH is controlled by the control unit 27 to timely increment the REG number by 1.

In other words, the REG counter 23 counts a REG number for each of PCFICH, PHICH, and PDCCH so that each count value of the REG counter 23 represents each corresponding REG number.

The comparator 24 receives the REG count value for PDCCH from the REG counter 23, and makes a judgment on whether the REG represented by the REG number is a REG for PDCCH, or not. The judgment is made by way of an operation of Step S 22 to be explained with reference to the flowchart of Fig. 9. If once it is judged to be the REG, the comparator 24 subsequently receives the REG count value for PCFICH from the REG counter 23, and makes a judgment on whether or not the REG count value for PCFICH is the same as the REG count value for PDCCH, and then returns the result to the control unit 27.

Next, the comparator 24 receives the REG count value for PHICH from the REG counter 23; and in the same way, makes a judgment on whether or not the REG count value for PHICH is the same as the REG count value for PDCCH, and then returns the result to the control unit 27. If the REG count value for PDCCH is neither the same as the REG count value for PCFICH nor the same as the REG count value for PHICH, the REG represented by the REG count value for PDCCH can be deemed to be a REG where PDCCH is mapped. Then, the result is output to the REG pair unit 26.

The counter 25 counts a PDCCH symbol-quadruplet number m" and an OFDM symbol number l'. According to control by the control unit 27, timely the counter 25 either initializes the PDCCH symbol-quadruplet number m" and the OFDM symbol number l', or increments those numbers only by 1.

In the comparator 24, the OFDM symbol number l' according to the counter 25 is compared to the OFDM symbol number l'now at present. When these values agree with each other, the comparator 24 outputs the result to the REG pair unit 26. The OFDM symbol number l'now at present is input into the PDCCH demap unit 13 every time when an OFDM symbol is received, and then the OFDM symbol number l'now at present is supplied to the comparator 24 by the intermediary of the control unit 27.

According to procedures to be explained with reference to the flowcharts of Fig. 8 and Fig. 9, the control unit 27 controls the internal parameter storing unit 22, the REG counter 23, the comparator 24, and the counter 25.

A cyclic shift amount calculation unit 31, a counter initial value calculation unit 32, a deinterleave unit 33, and an address change unit 34 are provided in the PDCCH deinterleave and cyclic deshift unit 14.

The cyclic shift amount calculation unit 31 calculates a cyclic shift amount Ncs implemented on a demodulation datum, before the demodulation datum is obtained. The cyclic shift amount Ncs is obtained as a reminder of dividing the total number of REGs: ${N}_{PDCCH}^{REG}$
where PDCCH is mapped by a cell ID: ${N}_{ID}^{cell}$
It is expressed as: ${N}_{CS} = {N}_{PDCCH}^{REG} mod {N}_{ID}^{cell}$

The counter initial value calculation unit 32 calculates initial values of a row counter and a column counter of a deinterleaving matrix, by using the cyclic shift amount Ncs that has been calculated, and gives the initial values to the deinterleave unit 33. In a deinterleaving matrix (and its corresponding interleaving matrix at a transmission side), the number of rows C is expressed as: $C = {C}_{subblock}^{CC} = 32$
namely, the number of rows C is fixed to be 32. In the mean time the number of columns R is expressed as: $R = floor ⁢ \left(\left({N}_{PDCCH}^{REG}-1\right)/{C}_{subblock}^{CC}\right) + 1$ in a matrix. The size of the matrix may sometimes be greater than the total number of REGs (Math. 7); and in such a case, a dummy bit D is inserted in a top row. Incidentally, the dummy bit is not transmitted. The number of dummy bits is expressed as: $D = R ⋅ C - {N}_{PDCCH}^{REG}$

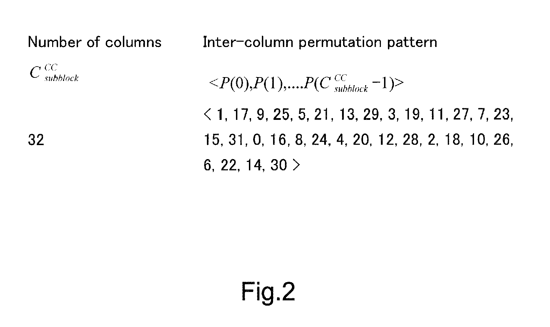

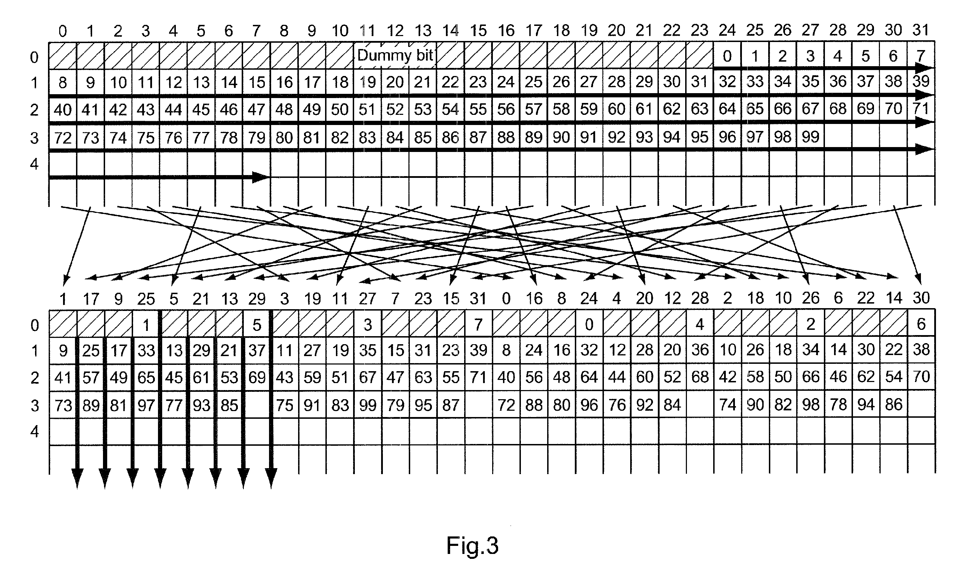

In an interleaving process at the transmission side, at first dummy bits are written in the top row, starting from a top column, on an interleaving matrix. Subsequently, REGs of PDCCH are written in a direction, from a top column toward an end column. Then, according to a re-arrangement pattern in the rows as described below: $< P \left(0\right) , P \left(1\right) , … P ⁢ \left({C}_{subblock}^{CC}-1\right) >$
the written data are re-arranged in the rows, and read out in the end, from the top row toward the end row. Fig. 2 shows an example of a re-arrangement pattern within rows of REGs of PDCCH by an interleaving process, and meanwhile Fig. 3 shows an example of re-arrangement by using the re-arrangement pattern.

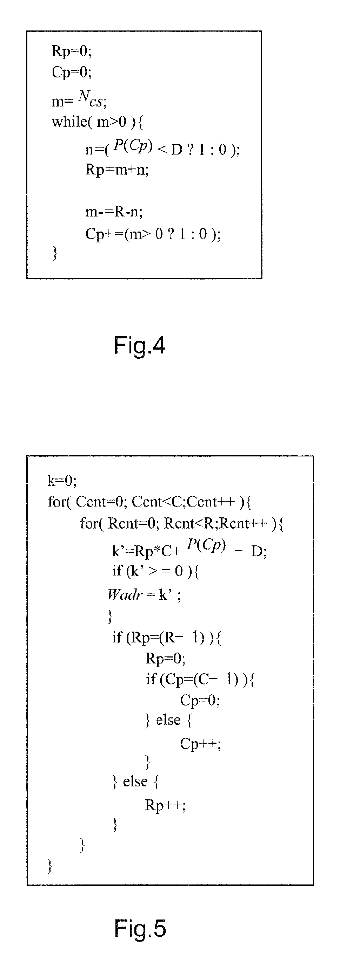

Demodulation data obtained as a result of demodulating PDCCH that has been interleaved as described above are in an arrangement of a matrix shown at a lower position in Fig. 3. Incidentally, in this example, shown is a case where the cyclic shift amount Ncs is equal to 0. In reality, the data to be obtained as the demodulation data are shifted for the amount of Ncs. Before demodulating PDCCH, the counter initial value calculation unit 32 makes a decision on initial positions of rows and columns, in accordance with the numerical advancement for the cyclic shift amount Ncs. Fig. 4 shows an example of such a processing operation. Fig. 4 is a drawing for explaining an example of a processing operation by the counter initial value calculation unit 32, with reference to a source code of a computer program. Rp is a row counter and Cp is a column counter. 'n' and 'm' are variables.

Each time subsequent to a unit processing operation, namely for example, each time subsequent to demapping PDCCH of one REG; the deinterleave unit 33 advances an interleaving matrix for the number of REGs progressed after a last unit processing operation. Specifically to describe, while the row counter Rp being advanced, and at the time when the row counter Rp reaches the number of columns R, the column counter Cp is incremented. At the same time, the number of columns Rp is initialized to be zero. Until reaching the number of REGs progressed after the last unit processing operation, this process is repeated. Fig. 5 shows an example of such a processing operation. Fig. 5 is a drawing for explaining an example of a processing operation by a deinterleave unit 33, with reference to a source code of a computer program. Wadr shown in Fig. 5 is a deinterleaving pattern.

The address change unit 34 changes an address where a demodulation datum is written, to a position number calculated by the deinterleave unit 33.

Explained next below are operations of cyclic deshifting and deinterleaving by the PDCCH cyclic deshift and deinterleave unit 14, together with demapping by the PDCCH demap unit 13.

For demapping PDCCH, it is simply needed to follow a procedure of mapping operation shown in a flowchart of Fig. 1.8, in reverse order. Namely, demapping operation is carried out on the basis of the RE number (k' described in Fig. 18). In this case, needed is to store all top RE numbers of the REGs where PCFICH and PHICH are mapped, to a memory unit. The process results in an increased size of a circuit. Therefore, in the present embodiment, serial REG numbers provided to the REGs are used instead of the RE numbers, for demapping PDCCH.

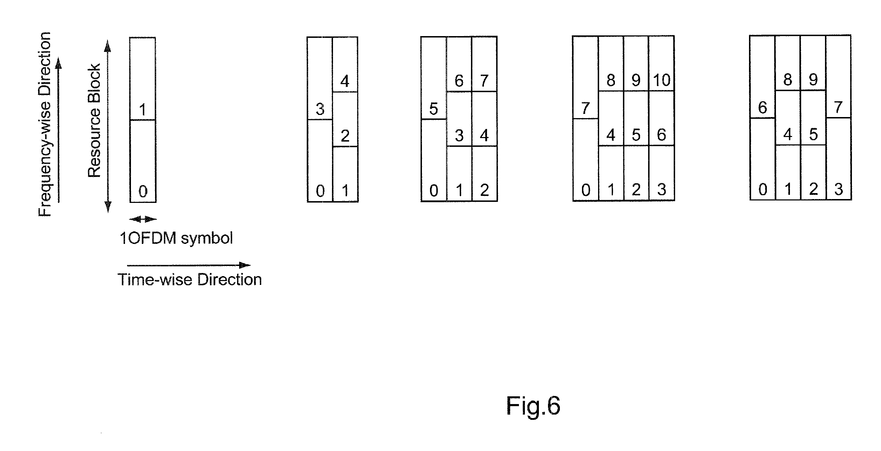

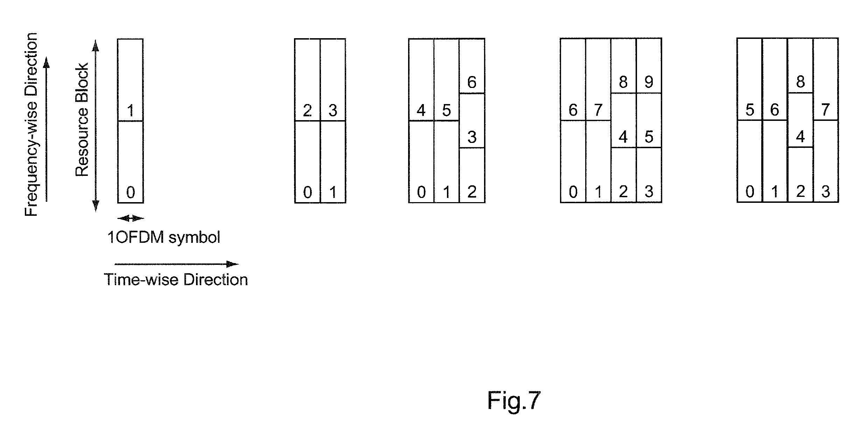

An arrangement of the REGs is common to Resource Block (RB), with regard to each RB. Accordingly, demapping PDCCH is carried out for each RB as a unit. Fig. 6 and Fig. 7 are diagrams that show all of applicable REG arrangements. Fig. 6 is a diagram that shows an REG arrangement in the case where the number of transmission antennas is one or two. In the meantime, Fig. 7 is a diagram that shows an REG arrangement in the case where the number of transmission antennas is four. Each of the squares shown in Fig. 6 and Fig. 7 represents one REG. Incidentally, in Fig. 6 and Fig. 7, a horizontal direction and a vertical direction represent a time-wise direction and a frequency-wise direction, respectively.

In the case of an OFDM symbol with no RS, REGs of one RB are grouped into three sections for placement; i.e., an upper section, a middle section, and a lower section. Therefore, a demapping operation for one RB is carried out in three stages, as a general rule. Incidentally, a numerical number in a cell (square) of each REG shown in Fig. 6 and Fig. 7 represents a PDCCH symbol-quadruplet number in one RB. Though PCFICH and PHICH are not taken into consideration for simple explanation here in Fig. 6 and Fig. 7, it is needed in reality to carry out mapping PDCCH while staying away from any REG where PCFICH and PHICH are mapped, and therefore, sometimes the PDCCH symbol-quadruplet number may become different from the numerical number shown in Fig. 6 and Fig. 7.

Explained next below are operations of demapping and deinterleaving of PDCCH with reference to the flowcharts of Fig. 8 and Fig. 9. Fig. 8 is the flowchart for explaining a demapping operation of PDCCH. Fig. 9 is the flowchart for explaining details of a process for one RB in the flowchart shown in Fig. 8.

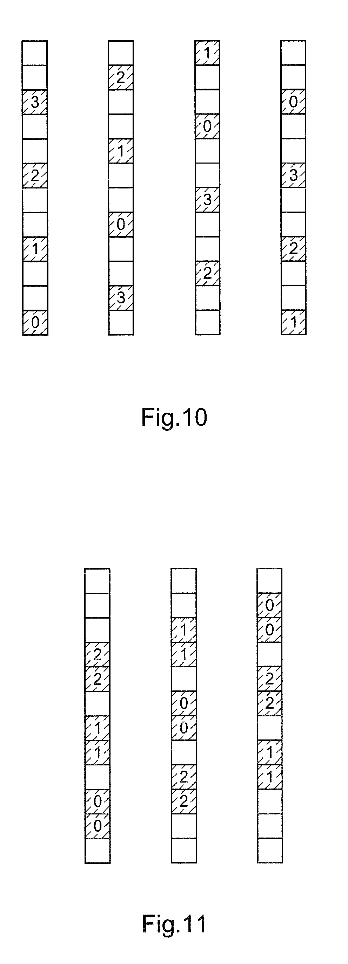

At Step S11, the PCFICH demap unit 11 demaps PCFICH. PCFICH is mapped to OFDM symbol #0. Fig. 10 is a diagram that shows a mapping image of PCFICH. Each of the squares shown in Fig. 10 represent one REG, and each square having diagonal lines represents an REG where PCFICH is demapped. In Fig. 10, a numerical number given in a square represents a PCFICH symbol-quadruplet number.

In the meantime, according to NPL 1, an algorithm for calculating a PCFICH mapping pattern is expressed as Formula (1) shows. 'k' represents a mapping pattern. The number of RBs for one OFDM symbol, which an expression below show: ${N}_{RB}^{DL}$
becomes one of six different ways; i.e., 6, 15, 25, 50, 75, and 100, according to a system band width. The number of sub-carriers (SCs) for one RB, which an expression below shows: ${N}_{sc}^{RB}$
is a constant, i.e., 12. Moreover, a function, which an expression below shows: $⌊ x ⌋$
is a floor function.
{Math. 17} $\begin{matrix}PCFICH symbol - quadruplet# ⁢ 0 & k = \overline{k} \\ PCFICH symbol - quadruplet# ⁢ 1 & k = \overline{k} ⁢ ʹ + ⌊ {N}_{RB}^{DL} / 2 ⌋ ⋅ {N}_{sc}^{RB} / 2 \\ PCFICH symbol - quadruplet# ⁢ 2 & k = \overline{k} ⁢ ʹ + ⌊ 2 ⁢ {N}_{RB}^{DL} / 2 ⌋ ⋅ {N}_{sc}^{RB} / 2 \\ PCFICH symbol - quadruplet# ⁢ 3 & k = \overline{k} ⁢ ʹ + ⌊ 3 ⁢ {N}_{RB}^{DL} / 2 ⌋ ⋅ {N}_{sc}^{RB} / 2\end{matrix}$

Wherein, 'k' in Formula (1) is a remainder of the following expression: ${N}_{RB}^{DL} {N}_{sc}^{RB}$
Furthermore, the following expression: $\overline{k}$
is calculated by way of Formula (2).
{Math. 20} $\overline{k} = \left({N}_{sc}^{RB}/2\right) ⋅ \left({N}_{ID}^{cell} mod 2⁢{N}_{RB}^{DL}\right)$ ${N}_{ID}^{cell}$
The above-described expression represents a number assigned to each base station (Physical-layer cell identity), and it is given in a numeric range from 0 to 503.

With the above expression being considered, it is understood that Math. 19 is a multiple number of 6 eventually, as being the following expression: $\left({N}_{sc}^{RB}/2\right)$
OFDM symbol #0, where PCFICH is mapped, has an RS and therefore the size of REG also becomes 6 in the same way. Accordingly, the REG number for which PCFICH is mapped can be calculated by using Formula (3). Incidentally, the following expression: $\overline{k} ⁢ ʹ$
is calculated by dividing Math. 19 by Math. 22.
{Math. 24} $\begin{matrix}{π}_{REG}^{PCFICH} \left[0\right] = \overline{k} ⁢ ʹ \\ {π}_{REG}^{PCFICH} \left[1\right] = \overline{k} ⁢ ʹ + ⌊ {N}_{RB}^{DL} / 2 ⌋ \\ {π}_{REG}^{PCFICH} \left[2\right] = \overline{k} ⁢ ʹ + ⌊ 2 ⁢ {N}_{RB}^{DL} / 2 ⌋ \\ {π}_{REG}^{PCFICH} \left[3\right] = \overline{k} ⁢ ʹ + ⌊ 3 ⁢ {N}_{RB}^{DL} / 2 ⌋\end{matrix}$

Wherein, Math. 23 is a remainder of the following expression: $2 ⁢ {N}_{RB}^{DL}$
Furthermore, with respect to the following expression: ${π}_{REG}^{PCFICH} \left[i\right]$
it is also a remainder of Math. 25. For example, in the case where an addition result on the second member of the right side of Formula (3) is equal to or greater than Math. 25, this can be calculated by subtracting Math. 25 from the addition result. For demapping PDCCH, a calculation is made to obtain a PCFICH symbol-quadruplet number with which Math. 26 becomes minimum, in order to make it Math. 1. Wherein, 'i' is a PCFICH symbol-quadruplet number, which is a numerical value in a range from 0 to 3.

Next, at Step S12, the PHICH demap unit 12 demaps PHICH.

Though being usually mapped to OFDM symbol #0, PHICH is mapped to a plurality of OFDM symbols in the case of Extended PHICH duration.

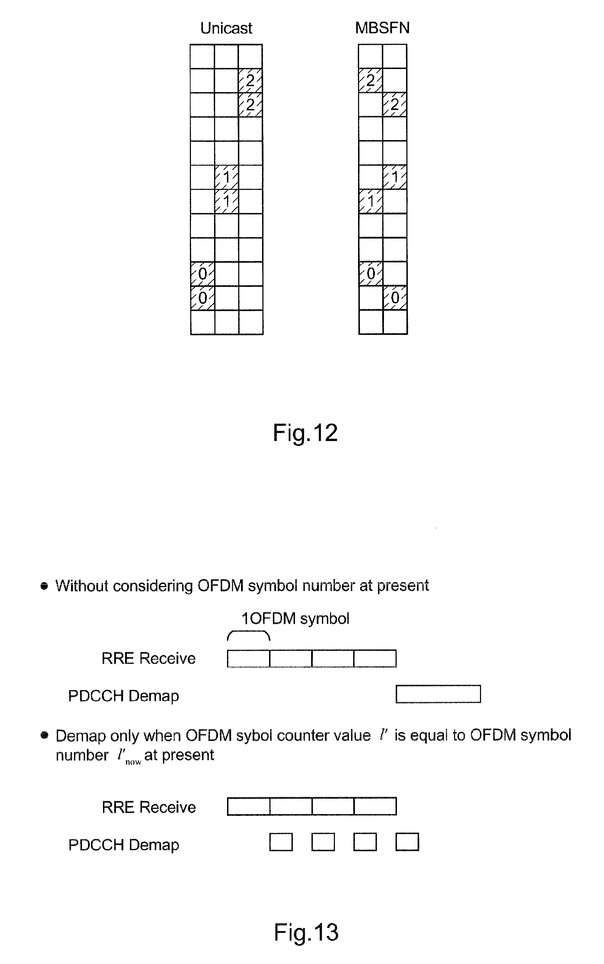

Fig. 11 is a diagram that shows a mapping image of normal PHICH. Meanwhile, Fig. 12 is a diagram that shows a mapping image of PHICH in the case of Extended PHICH duration. A right-hand side of Fig. 12 shows a mapping image of PHICH in the case of Extended PHICH duration and MBSFN subframe. Though mapping is carried out alternately for every two REGs on two OFDM symbols in the case of Extended PHICH duration and MBSFN subframe, Fig. 12 shows a case of mapping alternately for every one REG, in order to simplify an explanation.

Each of the squares shown in Fig. 11 and Fig. 12 represents one REG, and each square having diagonal lines represents an REG where PHICH is mapped. In Fig. 11 and Fig. 12, a numerical number given in a square represents a PHICH symbol-quadruplet number.

In the meantime, according to NPL 1, an algorithm for calculating a PHICH mapping pattern is as described next. Determined at first according to Formula (4) is an OFDM symbol number li' where PHICH is mapped.
{Math. 27} ${l}_{i}^{ʹ} = { \begin{matrix}0 & normal PHICH duration , all subframes \\ \left(⌊mʹ/2⌋+i+1\right) ⁢ mod 2 & extended PHICH duration , MBSFN subframes \\ \left(⌊mʹ/2⌋+i+1\right) ⁢ mod 2 & extended PHICH duration , subframe 1 and 6 in frame structure type 2 \\ i & otherwise\end{matrix}$
A PHICH symbol-quadruplet number 'i' is given as a numerical value in a range from 0 to 2. A PHICH mapping unit number m' is given as a PHICH group number (0 to 25) at the time of Normal CP; and meanwhile, at the time of Extended CP, it is given as a value calculated by way of dividing a PHICH group number (0 to 50) by two and rounding off a digit after the decimal point.

In the case of Extended PHICH duration and MBSFN subframe, PHICH is mapped to two OFDM symbols; and meanwhile, simply in the case of Extended PHICH duration, PHICH is mapped to three OFDM symbols. In the case of Normal PHICH duration, PHICH is mapped to OFDM symbol #0.

Subsequently determined, as described below, is an REG number where PHICHI at each OFDM symbol is mapped.

In the case of Extended PHICH duration and MBSFN subframe, an REG number where PHICHI is mapped is determined according to Formula (5).
{Math. 28} ${π}_{REG}^{PHICH} \left[mʹ, i\right] = { \begin{matrix}\left(⌊{N}_{ID}^{cell}⋅{n}_{{l}_{1}^{ʹ}}/{n}_{1}⌋+mʹ\right) ⁢ mod {n}_{{l}_{1}^{ʹ}} & i = 0 \\ \left(⌊{N}_{ID}^{cell}⋅{n}_{{l}_{1}^{ʹ}}/{n}_{1}⌋+mʹ+⌊{n}_{{l}_{1}^{ʹ}}/3⌋\right) ⁢ mod {n}_{{l}_{1}^{ʹ}} & i = 1 \\ \left(⌊{N}_{ID}^{cell}⋅{n}_{{l}_{1}^{ʹ}}/{n}_{1}⌋+mʹ+⌊2⁢{n}_{{l}_{1}^{ʹ}}/3⌋\right) ⁢ mod {n}_{{l}_{1}^{ʹ}} & i = 2\end{matrix}$

In any other case, an REG number where PHICHI is mapped is determined according to Formula (6).
{Math. 29} ${π}_{REG}^{PHICH} \left[mʹ, i\right] = { \begin{matrix}\left(⌊{N}_{ID}^{cell}⋅{n}_{{l}_{1}^{ʹ}}/{n}_{0}⌋+mʹ\right) ⁢ mod {n}_{{l}_{1}^{ʹ}} & i = 0 \\ \left(⌊{N}_{ID}^{cell}⋅{n}_{{l}_{1}^{ʹ}}/{n}_{0}⌋+mʹ+⌊{n}_{{l}_{1}^{ʹ}}/3⌋\right) ⁢ mod {n}_{{l}_{1}^{ʹ}} & i = 1 \\ \left(⌊{N}_{ID}^{cell}⋅{n}_{{l}_{1}^{ʹ}}/{n}_{0}⌋+mʹ+⌊2⁢{n}_{{l}_{1}^{ʹ}}/3⌋\right) ⁢ mod {n}_{{l}_{1}^{ʹ}} & i = 2\end{matrix}$

In the meantime, an REG number where an 'i'-th PHICH symbol-quadruplet is mapped is expressed with the following expression: ${π}_{REG}^{PCFICH} \left[mʹ, i\right]$
The number of REGs of the OFDM symbol number li', which an expression below shows: ${n}_{{l}_{1}^{ʹ}}$
is the number of REGs given by subtracting REGs where PCFICH is mapped, in the case of OFDM symbol #0.

At the time of demapping PHICH, a PHICH symbol-quadruplet number 'i' and a PHICH mapping unit number m', at a position where (Math. 30) becomes minimum, are searched for; and those numbers are each stored in (Math. 2) and (Math. 3). At this time, PHICH is mapped to a plurality of OFDM symbols, in the case of Extended PHICH duration. In this case, PHICH is held for each OFDM symbol in the memory unit 21.

At Step S13, the internal parameter storing unit 22, the REG counter 23, and the counter 25 each initialize the PDCCH symbol-quadruplet number and REG number, the minimum REG number where PCFICH is mapped, and the minimum REG number where PHICH is mapped.

Namely, the REG counter 23 initializes the PDCCH symbol quadruplet number by setting 0 for m".

On the other hand, the internal parameter storing unit 22 initializes the PCFICH symbol-quadruplet number, as described in Formula (7).
{Math. 32} $\begin{matrix}{n}_{quadruplet}^{PCFICH} = & {MIN}_{quadruplet}^{PCFICH}\end{matrix}$

Moreover, the REG counter 23 initializes the PCFICH REG number, as described in Formula (8).
{Math. 33} ${n}_{REG}^{PCFICH} \left[0\right] = \overline{k} ⁢ ʹ + ⌊ {n}_{quadruplet}^{PCFICH} ⋅ {N}_{RB}^{DL} / 2 ⌋$

Furthermore, while the variable 'i' being incremented each time by 1 from 0 is less than the number of OFDM symbols L for which PDCCH is mapped; the PHICH symbol-quadruplet number, the PHICH mapping unit number, and the PHICH REG number are initialized in the internal parameter storing unit 22 according to Formula (9) and Formula (10).
{Math. 34} $\begin{matrix}{n}_{quadruplet}^{PHICH} \left[i\right] = {MIN}_{quadruplet}^{PHICH} \left[i\right] \\ {n}_{unit}^{PHICH} \left[i\right] = {MIN}_{unit}^{PHICH} \left[i\right] \\ {n}_{REG}^{PHICH} \left[i\right] = {π}_{REG}^{PHICH} \left[{n}_{quadruplet}^{PHICH}\left[i\right],{n}_{unit}^{PHICH}\left[i\right]\right]\end{matrix}$

Incidentally, though the variable 'i' is incremented from 0 up to but not including the number of OFDM symbols L for which PDCCH is mapped; the PHICH symbol-quadruplet number, the PHICH mapping unit number, and the PHICH REG number are initialized according to Formula (9) in the case where the variable 'i' is less than the number of OFDM symbols L' for which PHICH is mapped.

In the case where the variable 'i' becomes not less than the number of OFDM symbols L for which PDCCH is mapped as a result of being incremented 'i' each time by 1, or the variable 'i' becomes not less than the number of OFDM symbols L' for which PHICH is mapped; initializing is carried out in the internal parameter storing unit 22 with a great value, with which PHICH is not mapped and which does not exist in reality as an OFDM symbol, as shown in Formula (10).
{Math. 35} $\begin{matrix}{n}_{quadruplet}^{PHICH} \left[i\right] = 4 \\ {n}_{unit}^{PHICH} \left[i\right] = 51 \\ {n}_{REG}^{PHICH} \left[i\right] = 301\end{matrix}$

Incidentally, any great value that does not exist in reality, for example such as 301, may be substituted into the following expression: ${n}_{REG}^{PCFICH} \left[1\right] ∼ {n}_{REG}^{PCFICH} \left[3\right]$
Meanwhile, in the first place, a judgment on PCFICH may be carried out only in the case of l' = 0.

At Step S14, the cyclic shift amount calculation unit 31 calculates a cyclic shift amount Ncs implemented on a demodulation datum, before the demodulation datum is obtained. Moreover, at Step S 15, the counter initial value calculation unit 32 calculates initial values of a row counter and a column counter of a deinterleaving matrix, by using the cyclic shift amount Ncs that has been calculated, and initializes both the counters. At Step S16, the REGs included in one RB are sequentially processed.

The number of REGs included in one RB is specific, depending on whether or not an RS is mapped to the OFDM symbol; namely, the number is 2 when an RS is mapped, and it is 3 when no RS is mapped. In the present case, it is assumed for simplifying the process that the number of REGs included in one RB is always 3.

In the following explanation, the REGs are each called 'a lower section', 'a middle section', and 'an upper section' in a direction from a lower frequency side. Presence of RS is dependent on the OFDM symbol, the TxAnt number, and the CP length. The number of REGs being 2 means that no middle section exists. Then, it is judged in a later step that the section is not a REG, and procedures from Step S23 to Step S32 shown in Fig. 9 are skipped.

Incidentally, only in the case of Extended CP, a narrow band (the number of RBs is 10 or less), and CFI being 3; the number of REGs of OFDM symbol #3 is 2 so that no middle section exists. In this case, it is carefully needed to map PDCCH to a REG of an upper section of OFDM symbol #3, before an REG of an upper section of OFDM symbol #2 in the case of the TxAnt number being 4, or an REG of an upper section of OFDM symbols #1 and #2 in any other case.

At Step S16 shown in Fig. 8, procedures from Step S21 to S34 shown in Fig. 9 are repeated with respect to a lower section, a middle section, and an upper section of one RB.

At Step S21, the counter 25 sets 0 for the OFDM symbol number li'. At Step S 22, the comparator 24 receives an REG count value for PDCCH from the REG counter 23, and makes a judgment on whether or not it is an REG for PDCCH. If it is judged to be such an REG, operation progresses to Step S23.

At Step S22, if it is judged to be an REG, operation progresses to Step S23.

At Step S23, the comparator 24 receives an REG count value for PCFICH from the REG counter 23; and by way of making a judgment on whether or not the REG count value for PCFICH is the same as the REG count value for PDCCH, the comparator 24 judges if PCFICH is already mapped to the REG indicated by the REG count value for PDCCH, or not.

If it is judged at Step S23 that PCFICH is already mapped to the REG indicated by the REG count value for PDCCH, operation progresses to Step S24 to carry out an updating process with respect to PCFICH at the REG counter 23.

More specifically, if operation reaches an REG where PCFICH is mapped, mapping PDCCH for the REG is skipped. At the time, for the REG where PCFICH is mapped, an update is made so as to execute for a next PCFICH symbol-quadruplet number. The PCFICH symbol quadruplet number is updated by way of a calculation described as Formula (11), and in the meantime, the PCFICH REG number is updated by way of a calculation described as Formula (12). Since the PCFICH symbol-quadruplet number is 4, an operation of mod 4 is executed. Furthermore; ${n}_{REG}^{PCFICH} \left[0\right]$
is also a remainder of the following expression: $2 ⁢ {N}_{RB}^{DL}$ ${n}_{quadruplet}^{PCFICH} = \left({n}_{quadruplet}^{PCFICH}+1\right) mod 4$
{Math. 40} ${n}_{REG}^{PCFICH} \left[0\right] = \overline{k} + ⌊ {n}_{quadruplet}^{PCFICH} ⋅ {N}_{RB}^{DL} / 2 ⌋$

After Step S24, operation progresses to Step S32.

If it is judged at Step S23 that PCFICH is not mapped to the REG indicated by the REG count value for PDCCH, operation progresses to Step S25. At Step S25, the comparator 24 receives an REG count value for PHICH from the REG counter 23; and by way of making a judgment on whether or not the REG count value for PHICH is the same as the REG count value for PDCCH, the comparator 24 judges if PHICH is already mapped to the REG indicated by the REG count value for PDCCH, or not.

If it is judged at Step S25 that PHICH is already mapped to the REG indicated by the REG count value for PDCCH, operation progresses to Step S26 to carry out an updating process with respect to PHICH at the REG counter 23.

More specifically, if operation reaches an REG where PHICH is mapped, mapping PDCCH for the REG is skipped. At the time, for the REG where PHICH is mapped, an update is made so as to execute for a next PHICH symbol-quadruplet number. Since the PHICH symbol-quadruplet number is 3, an operation of mod 3 is executed. Incidentally, in order to simply explain, an explanation is made here without considering a case involving MBSFN.

More in detail, in the case where a condition that Formula (13) mentions is fulfilled, the PHICH symbol-quadruplet number is updated by way of an operation that Formula (14) mentions.
{Math. 41} ${n}_{unit}^{PHICH} \left(lʹ\right) = {N}_{unit}^{PHICH}$
{Math. 42} ${n}_{quadruplet}^{PHICH} \left(lʹ\right) = \left({n}_{quadruplet}^{PHICH}\left(lʹ\right)+1\right) mod 3$

In other words, wherein the condition that Formula (13) mentions is fulfilled with the PHICH mapping unit number mentioned by the following expression: ${n}_{unit}^{PHICH} \left(lʹ\right)$ if the PHICH mapping unit number reaches the number of PHICH mapping units mentioned by the following expression: ${N}_{unit}^{PHICH}$
the PHICH symbol-quadruplet number mentioned by the following expression: ${n}_{quadruplet}^{PHICH} \left(lʹ\right)$
is updated. Then, as Formula (15) shows, the PHICH mapping unit number mentioned by the following expression, ${n}_{unit}^{PHICH} \left(lʹ\right)$
is initialized to be 0.
{Math. 47} ${n}_{unit}^{PHICH} \left(lʹ\right) = 0$

If the condition mentioned by Formula (13) is not fulfilled, the PHICH, mapping unit number mentioned by the following expression: ${n}_{unit}^{PHICH} \left(lʹ\right)$
is incremented only by 1, as shown in Formula (16).
{Math. 49} ${n}_{unit}^{PHICH} \left(lʹ\right) = {n}_{unit}^{PHICH} \left(lʹ\right) + 1$

After the updating operations shown in Formula (13) to Formula (16), the REG number, mentioned by the following expression, to which PHICH is mapped; ${n}_{REG}^{PHICH} \left(lʹ\right)$
is updated, as Formula (17) shows.
{Math. 51} ${n}_{REG}^{PHICH} \left[lʹ\right] = {π}_{REG}^{PHICH} ⌊ {n}_{quadruplet}^{PHICH} \left[lʹ\right] , {n}_{unit}^{PHICH} \left[lʹ\right] ⌋$

In the meantime, as far as no case involving MBSFN is taken into consideration, PHICH symbol-quadruplet is mapped continuously while each PHICH mapping unit being handled as a unit. Therefore, an update of an REG, where PHICH is mapped, can be calculated without referring to an expression described below: ${π}_{REG}^{PHICH} \left[mʹ, i\right]$
by way of incrementing the following expression by 1: ${n}_{REG}^{PHICH} \left(lʹ\right)$
Incidentally, in a case involving MBSFN, the OFDM symbol changes for every two REGs as a unit, and therefore an increment of 3 is made. Moreover, at the time of updating the PHICH symbol-quadruplet number that the following expression describes: ${n}_{quadruplet}^{PHICH} \left(lʹ\right)$
it is also needed to take two REGs as a unit into account.

After Step S26, operation progresses to Step S32.

If it is judged at Step S25 that PHICH is not mapped to the REG indicated by the REG count value for PDCCH, the deinterleave unit 33 carries out a deinterleaving operation at Step S27. Then, only if the OFDM symbol number li' agrees with the OFDM symbol number l'now at present at Step S28, operation progresses to Step S29. At Step S29, the address change unit 34 changes a write address for demodulation data to an address calculated by the deinterleave unit 33. It is an operation that the following expression describes: ${REG}_{SYM}^{PDCCH} \left[Wadr\right] = REG ⁢ \left({n}_{REG}\left[lʹ\right]\times \left(4+{n}_{RS}\right),lʹ\right)$

Subsequently, the REG pair unit 26 demaps PDCCH at Step S30. Namely, the REG pair unit 26 demaps the REG having the PDCCH symbol-quadruplet number that the REG count value for PDCCH indicates. In this case, nRS represents the number of RSs in the REG, i.e., 0 or 2.

After Step S30, or in the case where the OFDM symbol number li' does not agree with the OFDM symbol number l'now at present at Step S28, operation progresses to Step S31. At Step S31, the internal parameter storing unit 22 increments the PDCCH symbol-quadruplet number m" only by 1. At Step S32, the REG counter 23 increments the REG number of each OFDM symbol only by 1.

At Step S33, the REG counter 23 increments the OFDM symbol number l' only by 1. At Step S34, the comparator 24 makes a judgment on whether or not the OFDM symbol number l'has reached the number of OFDM symbols L for which PDCCH is mapped. If it is judged at Step S34 that the OFDM symbol number l' has not yet reached the number of OFDM symbols L for which PDCCH is mapped, operation returns to Step S22 in order to repeat the procedures described above.

After the procedures finish with respect to a lower section, a middle section, and an upper section of one RB, operation returns to Step S16 shown in Fig. 8 to progress to Step S17. At Step S17, the control unit 27 judges whether or not nREG[0] is equal to two times of the number of RBs for one OFDM symbol (Math. 14). If it is judged that nREG[0] is not equal to two times of the number of RBs for one OFDM symbol (Math. 14), operation returns to Step S16 in order to repeat the procedures described above.

If it is judged at Step S17 that nREG[0] is equal to two times of the number of RBs for one OFDM symbol (Math. 14), the procedures of demapping PDCCH finish.

As described above, in the procedures of demapping PDCCH, a number assigned to an REG is used instead of an RE number. Then, at the time of demapping PDCCH, the REG numbers of REGs where PCFICH and PHICH are mapped are calculated in an ascending order for staying away from those REGs so that it becomes possible to eliminate "a memory unit for storing all top RE numbers of REGs where PCFICH and PHICH are mapped", though the memory unit being conventionally needed. In other words, it becomes possible to demap PDCCH in LTE by means of a small-scale circuit.

Moreover, a parameter called l'now representing the OFDM symbol number at present is added for demapping PDCCH, in such a way that demapping is carried out only when the OFDM symbol number l'agrees with the OFDM symbol number l'now at present.

Demapping PDCCH is carried out, while skipping any REG where PCFICH or PHICH is mapped. In order to find any REG where PCFICH or PHICH is mapped, it is needed to search a series of REGs in due order. In the meantime, for demapping PDCCH, it is unnecessary to take the order of the REGs into consideration. Therefore, all the REGs are searched with respect to each OFDM symbol, and demapping PDCCH is carried out only for a REG of the OFDM symbol at present.

Fig. 13 is a drawing that explains a demapping operation by using an OFDM symbol number lnow' at present. The drawing shows a comparison example with respect to operation timing of two cases: namely, in one case where a demapping operation is carried out without considering the OFDM symbol number lnow' at present, and in the other case where a demapping operation is carried out only when the OFDM symbol number l' agrees with the OFDM symbol number l'now at present.

In the case where a demapping operation is carried out without considering the OFDM symbol number lnow' at present, namely in the case where the operation is carried out for each series of REGs, searching REGs is needed only one time. Meanwhile, in this case, the operation can get started only after receiving all the REGs. On the contrary, in the case where the operation is carried out with respect to each OFDM symbol, searching REGs (the procedures shown in Fig. 9) needs to be done each time. Nevertheless, fortunately in that case, demapping PDCCH can be carried out each time when RRE for one OFDM symbol is received, and therefore it becomes possible to reduce the process overhead and cut down the memory unit for storing RRE data.

Incidentally, though the above explanation describes a method; in which searched is a PCFICH symbol-quadruplet number corresponding to a minimum REG number to which PCFICH is mapped, and then, starting from the position there, the operation of demapping PDCCH sequentially creates a demapping pattern of PCFICH for use; four demapping patterns of PCFICH may be prepared and stored in the first place for using them sequentially, or the four patterns may be re-arranged for using them.

Furthermore to describe; in the above method, though searched are a PHICH symbol-quadruplet number corresponding to a minimum REG number to which PHICH is mapped, and a PHICH mapping unit number, and in the operation of demapping PDCCH, the PHICH symbol-quadruplet number and the PHICH mapping unit number are initialized at first, and then the REG number of PHICH is subsequently initialized; the minimum REG number to which PHICH is mapped is already searched at the time of demapping PHICH, and therefore the minimum REG number may be stored and used for demapping PDCCH.

In the embodiment described above, deinterleaving of PDCCH and cyclic deshifting are processed in parallel with demodulation so that the process time of the deinterleaving and cyclic deshifting, as well as the memory unit for storing the data after processing operations of the deinterleaving and cyclic deshifting can be reduced. Under the situation, the demodulation is carried out for each OFDM symbol as a unit.

In the demodulation for each OFDM symbol as a unit, while operation is carried out in a frequency-wise direction, PDCCH is sequentially mapped in a direction of the OFDM symbols. Therefore, sometimes the REGs of PDCCH may be progressed forward at most for the number of OFDM symbols for which PDCCH is mapped. Accordingly, in order that the deinterleaving operation is carried out for each OFDM symbol as a unit, it is made possible to advance for two steps or more at a time in operation on a deinterleaving matrix. Incidentally, in this context, the operation on a deinterleaving matrix means a procedure for advancing both counters in operation of calculating a position number on the matrix by using a row counter and a column counter.

Moreover, the cyclic shit is executed with initial values given to both the counters that are used in the operation on a deinterleaving matrix. Therefore, the cyclic shift amount is calculated before writing an initial demodulation datum, and then the initial values are calculated by using the cyclic shift amount. In the deinterleaving operation, both the counters are initialized with the initial values to start the operation.

Finally, an address into which the demodulation datum is written is changed to the address calculated by using both the counters of the deinterleaving matrix.

In this way, for deinterleaving and cyclic deshifting as well, operation can be carried out for each OFDM symbol as a unit. Thus, the overhead of process time is reduced. Furthermore, the operation can be carried out in parallel with demodulation so that the memory unit required can be cut down.

The series of processes described above may be executed by means of hardware, and may also be executed by way of software. For executing the series of processes by way of software, a computer program constituting the software is installed into a computer, which is built in exclusive-use hardware, from a computer program recording medium; or the software is installed from a computer program recording medium, for example, into a general-purpose personal computer that can execute various functions with various computer programs being installed.

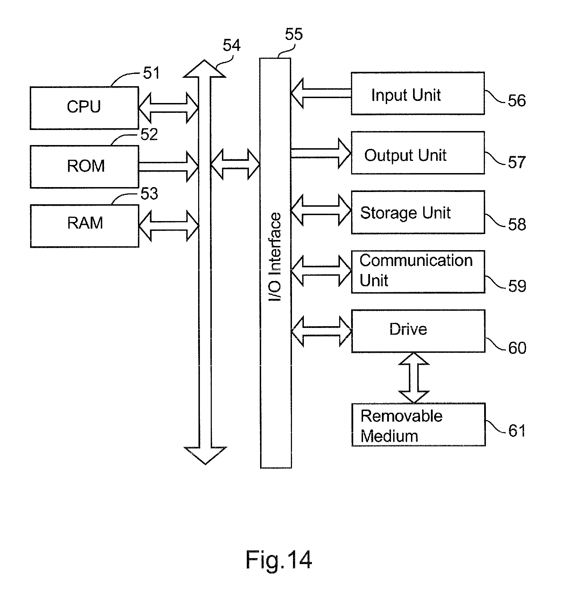

Fig. 14 is a block diagram showing a configuration example of hardware of a computer that executes the series of processes described above by way of a computer program.

In the computer; a central processing unit (CPU) 51, a read only memory (ROM) 52, and a random access memory (RAM) 53 are interconnected by using a bus 54.

Moreover, an I/O interface 55 is connected to the bus 54. Connected to the I/O interface 55 are; an input unit 56 including a keyboard, a mouse, a microphone, and the like; an output unit 57 including a display, a speaker, and the like; a storage unit 58 including a hard disc, a non-volatile memory, and the like; a communication unit 59 including a network interface and the like; and a drive 60 for driving a removable medium 61 such as a magnetic disc, an optical disc, a magnetic optical disc, or a semiconductor memory.

In the computer configured as described above, the CPU 51 loads a computer program, for example, stored in the storage unit 58 by way of the I/O interface 55 and the bus 54, and executes the program in order to carry out the series of processes described above.

The computer program to be executed by the computer (the CPU 51) is recorded, for being provided, in the removable medium 61 as a package medium; such as, for example, a magnetic disc (including a flexible disc), an optical disc (Compact Disc - Read Only Memory (CD-ROM), Digital Versatile Disc (DVD), and the like), a magnetic optical disc, or a semiconductor memory; or the computer program is provided via a wired or wireless transmission medium such as a local area network, the Internet, or digital satellite broadcasting.

Then, the computer program can be installed in the computer by way of being stored in the storage unit 58 through the I/O interface 55, while the removable medium 61 being mounted on the drive 60. Alternatively, the computer program can be installed in the computer by way of being stored in the storage unit 58, while being received in the communication unit 59 by the intermediary of a wired or wireless transmission medium. In another way, the computer program can previously be installed in the computer by way of storing the program in advance in the ROM 52 or the storage unit 58.

Incidentally, the program to be executed by the computer may be a program with which processes are carried out in chronological order along the sequence explained in this specification document, or may be a program with which processes are carried out in parallel or at the time as required, such as, in response to a call.

Furthermore, a scope of application of the embodiment of the present invention is not limited only to the embodiment described above, and various other variations may be made without departing from the concept of the present invention.

### {Reference Signs List}

- 11.: PCFICH demap unit
- 12.: PHICH demap unit
- 13.: PDCCH demap unit
- 14.: PDCCH cyclic deshift and deinterleave unit
- 21.: memory unit
- 22.: internal parameter storing unit
- 23.: REG counter
- 24.: comparator
- 25.: counter
- 26.: REG pair unit
- 27.: control unit
- 31.: cyclic shift amount calculation unit
- 32.: counter initial value calculation unit
- 33.: deinterleave unit
- 34.: address change unit

## Claims

1. A receiver for receiving a signal according to Long Term Evolution (LTE), for which interleaving and a cyclic shift are carried out, the signal being mapped for each transmission antenna with a resource element (RE) on a frequency-wise axis being as a unit, the receiver comprising:
a PDCCH demap unit for demapping Physical Downlink Control Channel (PDCCH) mapped to an Orthogonal Frequency Division Multiplexing (OFDM) symbol; and
a PDCCH deinterleave and cyclic deshift unit for carrying out cyclic deshifting and deinterleaving on a demodulation datum obtained by the PDCCH demap unit;
wherein the PDCCH demap unit includes:
a judgment means for making a judgment, with respect to a Resource Element Group (REG), which is a group of the RE and provided with a serial number, in order of the serial number, on whether or not neither Physical Control Format Indicator Channel (PCFICH) nor Physical HARQ (Hybrid Automatic Repeat Request) Indicator Channel (PHICH) are mapped to an attention-receiving REG that is watched at the time, and furthermore, on whether or not the serial number provided to the attention-receiving REG is correspondent to the OFDM symbol number at present, which is input each time when an OFDM symbol is received; and
a PDCCH demapping execution means for demapping PDCCH of the attention-receiving REG, in the case where neither PCFICH nor PHICH are mapped to the attention-receiving REG, and furthermore the serial number provided to the attention-receiving REG is correspondent to the OFDM symbol number at present; and
the PDCCH deinterleave and cyclic deshift unit includes:
a deinterleave unit for calculating a position number on a deinterleaving matrix by using a row counter and a column counter;
a cyclic shift amount calculation unit for calculating a cyclic shift amount implemented on the demodulation datum, before the demodulation datum is obtained;
a counter initial value calculation unit for calculating initial values of a row counter and a column counter, by using the cyclic shift amount, which has been calculated, in order to give the deinterleave unit the initial values; and
an address change unit for changing an address where the demodulation datum is written, to the position number calculated by the deinterleave unit.

2. A receiving method for receiving a signal according to LTE, for which interleaving and a cyclic shift are carried out, the signal being mapped for each transmission antenna with an RE on a frequency-wise axis being as a unit, the receiving method comprising execution of:
a first judgment step for making a judgment, with respect to an REG, which is a group of the RE and provided with a serial number, in order of the serial number, on whether or not at least either of PCFICH and PHICH is mapped to an attention-receiving REG that is watched at the time,
a second judgment step for making a judgment on whether or not the serial number provided to the attention-receiving REG is correspondent to the OFDM symbol number at present, which is input each time when an OFDM symbol is received; and
a PDCCH demapping step for demapping PDCCH of the attention-receiving REG, in the case where neither PCFICH nor PHICH are mapped to the attention-receiving REG, and furthermore the serial number provided to the attention-receiving REG is correspondent to the OFDM symbol number at present; and
in parallel with execution of the above steps, further comprising execution of;
a cyclic shift amount calculation step for calculating a cyclic shift amount implemented on the demodulation datum, before the demodulation datum is obtained;
a counter initializing step for calculating initial values of a row counter and a column counter for calculating a position number on a deinterleaving matrix, by using the cyclic shift amount calculated, and initializing the row counter and the column counter;
a deinterleaving step for calculating the position number on the deinterleaving matrix by using a row counter and a column counter; and
an address changing step for changing an address where the demodulation datum is written, to the position number calculated by the deinterleaving step.

3. A computer program to operate a computer of a receiver for receiving a signal according to LTE, for which interleaving and a cyclic shift are carried out, the signal being mapped for each transmission antenna with an RE on a frequency-wise axis being as a unit, the computer program comprising execution of:
a first judgment step for making a judgment, with respect to an REG, which is a group of the RE and provided with a serial number, in order of the serial number, on whether or not at least either of PCFICH and PHICH is mapped to an attention-receiving REG that is watched at the time,
a second judgment step for making a judgment on whether or not the serial number provided to the attention-receiving REG is correspondent to the OFDM symbol number at present, which is input each time when an OFDM symbol is received; and
a PDCCH demapping step for demapping PDCCH of the attention-receiving REG, in the case where neither PCFICH nor PHICH are mapped to the attention-receiving REG, and furthermore the serial number provided to the attention-receiving REG is correspondent to the OFDM symbol number at present; and
in parallel with execution of the above steps, further comprising execution of;
a cyclic shift amount calculation step for calculating a cyclic shift amount implemented on the demodulation datum, before the demodulation datum is obtained;
a counter initializing step for calculating initial values of a row counter and a column counter for calculating a position number on a deinterleaving matrix, by using the cyclic shift amount calculated, and initializing the row counter and the column counter;
a deinterleaving step for calculating the position number on the deinterleaving matrix by using a row counter and a column counter; and
an address changing step for changing an address where the demodulation datum is written, to the position number calculated by the deinterleaving step.
